(19) 

(11) **EP 4 600 773 B1**

(12) **EUROPEAN PATENT SPECIFICATION**

(45) Date of publication and mention of the grant of the patent:
**26.08.2026 Bulletin 2026/35**

(21) Application number: **25153985.4**

(22) Date of filing: **26.01.2025**

(51) International Patent Classification (IPC):
***G05B 19/418*** *(2006.01)* ***G05B 13/02*** *(2006.01)*

(52) Cooperative Patent Classification (CPC):
**G05B 19/41875; G05B 13/0265;** G05B 2219/32187; G05B 2219/32193; G05B 2219/32194

(54) **RECOMMENDING OPTIMUM CONFIGURATIONS IN INDUSTRIAL CONTROL SYSTEMS FOR IMPROVING QUALITY OF PRODUCT**

EMPFEHLUNG OPTIMALER KONFIGURATIONEN IN INDUSTRIELLEN STEUERUNGSSYSTEMEN ZUR VERBESSERUNG DER PRODUKTQUALITÄT

RECOMMANDATION DE CONFIGURATIONS OPTIMALES DANS DES SYSTÈMES DE COMMANDE INDUSTRIELS POUR AMÉLIORER LA QUALITÉ D'UN PRODUIT

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **09.02.2024 IN 202421008939**

(43) Date of publication of application:
**13.08.2025 Bulletin 2025/33**

(73) Proprietor: **Tata Consultancy Services Limited**
**Maharashtra (IN)**

(72) Inventors:
- **GHOSHDASTIDER, Mainak**
  **700156 Kolkata, West Bengal (IN)**
- **DAS, Abhisek**
  **700091 Kolkata, West Bengal (IN)**
- **CHATTOPADHYAY, Dhiman**
  **700091 Kolkata, West Bengal (IN)**
- **GAIKWAD, Sangram Dasharath**
  **411013 Pune, Hadapsar (IN)**
- **GHOSH, Tania**
  **700091 Kolkata, West Bengal (IN)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
**EP-A1- 3 885 850** **EP-A2- 3 982 225**
**US-A1- 2022 035 348**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

CROSS-REFERENCE TO RELATED APPLICATIONS AND PRIORITY

The present application claims priority from Indian patent application number 202421008939, filed on February 09, 2024.

TECHNICAL FIELD

The disclosure herein generally relates to a deep learning-based approach for a multi-objective constrained optimization, and, more particularly, to a method and system for recommending optimum configurations in industrial control systems for improving quality of product.

BACKGROUND

In industrial manufacturing, very common problem is that the operating conditions (e.g., Ambient Temperature) and raw material quality of a product get changed frequently. However, even under such changing environments industries would like to improve the quality of the product beyond historically observed best without violating constraints set by manufacturer or government. A batch that produces optimum quality of product is commonly known as the golden Batch. It is a huge challenge to improve upon or to consistently produce golden batches specially under changing environment without violating the constraints when historical data is noisy.

Existing techniques either perform random experiments and find out initial settings manually or depends on domain expert to define process parameters. The existing techniques like Bayesian optimization do not work with multiple process parameters of quality and improvement if quality is not consistent over successive batches. The existing techniques struggle if constraints are imposed by the manufacturer or the government. Further, existing gradient-based techniques do not perform efficiently if the requirement is to improve the product quality beyond historical data. Also, noisy data is a huge challenge for any of the existing techniques. Document US 2022/035348 A1 discloses computer-based methods and systems that provide automated batch data alignment for a batch production industrial process. An example embodiment selects a reference batch from batch data for a subject industrial process and configures batch alignment settings. In turn, a seed model configured to predict alignment quality given settings for one or more alignment hyperparameters is constructed. Collectively the selected reference batch, the configured batch alignment settings, the constructed seed model, and a set of representative batches, representative of the batch data for the industrial process, are used to perform at least one of: (i) automated active learning, (ii) interactive active learning, and (iii) guided learning to determine settings for the one or more alignment hyperparameters. Then, a batch alignment is performed using the determined settings for the one or more alignment hyperparameters and the configured batch alignment settings. The resulting aligned batch data of the subject industrial process enables improved modeling and control of batch productions by the subject industrial process. Document EP3982225A2 discloses a method and system for regime-based process optimization of various assets of industrial manufacturing and process plants or units. Operating regimes of assets are identified and a regime similarity score of each asset is computed from regime sequences of integrated industrial data and compared with a given threshold to identify regimes of operation. Operating regimes are matched with regimes of regime database and industrial assets and similar operating regimes are group together. Process optimization is carried out for each group of industrial assets to identify optimum settings in order to maximize output or minimize loss/cost considering process and equipment constraints. Anomalies are analyzed in the unmatched operating regimes and a diagnosis is carried out to identify the root cause for any detected anomalies. Remaining useful life of components in the assets with unmatched operating regimes is estimated to ensure component reliability and to prevent failure. Document EP3885850A1 provides reinforcement learning based control strategy to perform both chiller ON/OFF sequencing as well as setpoint leaving chilled water temperature (LCWT) scheduling. A RL agent is trained using a re-trained transfer learning (TL) model and LCWT, return chilled water temperature of target chillers and ambient temperature of building are read for determining required cooling load to be provided by target chiller(s) based on which target chillers are scheduled for turning ON/OFF. Transfer learning-based approach is implemented by present disclosure to predict power consumed by a chiller at some setpoint by using a model trained on similar chillers which were operated at that setpoint since chillers are usually run at a single setpoint.

SUMMARY

Embodiments of the present disclosure present technological improvements as solutions to one or more of the above-mentioned technical problems recognized by the inventors in conventional systems. In one embodiment, a method to recommend optimum configurations in industrial control systems for improving quality of product is provided and is as

disclosed in appended independent method claim 1.

In another aspect, a system for recommending optimum configurations in industrial control systems for improving quality of product is provided and is as disclosed in the appended independent system claim 6.

In yet another aspect, there are provided one or more non-transitory machine-readable information storage mediums comprising one or more instructions, which when executed by one or more hardware processors causes a method to recommend optimum configurations in industrial control systems for improving quality of product is provided and is disclosed in appended independent claim 11.

It is to be understood that both the foregoing general description and the following detailed description are exemplary and explanatory only and are not restrictive of the invention, as claimed.

## BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates an exemplary system for recommending optimum configurations in industrial control systems, according to some embodiments of the present disclosure.

FIG. 2 is a block diagram to recommend optimum configurations in industrial control systems implemented by the system of FIG. 1, according to some embodiments of the present disclosure.

FIG. 3A and 3B (collectively referred as FIG. 3) are exemplary flow diagrams illustrating a processor-implemented method for recommending optimum configurations in industrial control systems, according to some embodiments of the present disclosure.

FIG. 4A and 4B (collectively referred as FIG. 4) are functional flow diagrams to illustrate steps for recommending optimum configurations in industrial control systems, according to some embodiments of the present disclosure.

FIG. 5 is a schematic diagram to illustrate product quality score improvement over batch iterations, according to some embodiments of the present disclosure.

FIG. 6 is a schematic diagram to illustrate recommendation mechanism considering maximum quality without violating any constraint, according to some embodiments of the present disclosure.

FIG. 7 is a schematic diagram to illustrate relationship of constraints to the threshold level over iterations, according to some embodiments of the present disclosure.

## DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

In an industrial manufacturing, very common problem is that the operating conditions (e.g., Ambient Temperature) and raw material quality of a product get changed frequently. However even under such changing environments industries would like to improve the quality of the product beyond historically observed best without violating constraints set by a manufacturer or government. A batch that produces optimum quality of product is commonly known as the golden Batch. It is a huge challenge to improve upon or to consistently produce golden batches specially under changing environment without violating the constraints when historical data is noisy. Existing techniques either perform random experiments and find out initial settings manually or depends on domain expert to define process parameters.

Embodiments herein provide a method and system for recommending optimum configurations in industrial control systems for improving quality of product. The system is configured to automate improvement over existing golden batch with a data driven approach and replace need of random experimentation with very minimal systematic experiments. The system ensures that no constraint violations are made, and the system remains stable even when data is noisy. Further, the system recommends values of parameters so that improvement in quality is achieved. The changes in parameter value should be gradual even if the historical data received from feedback is noisy.

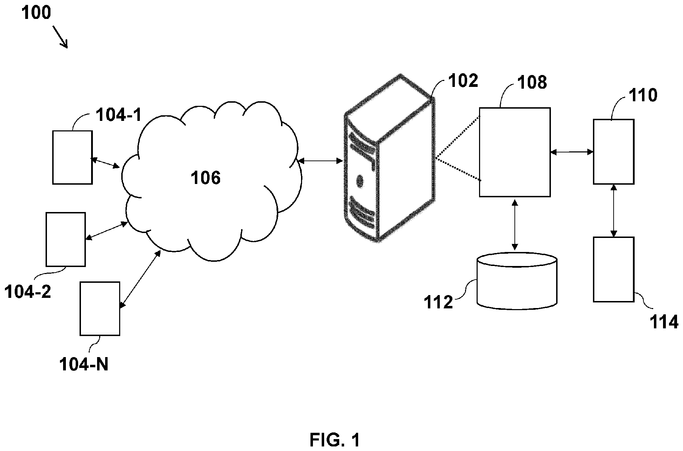

Referring now to the drawings, and more particularly to FIG. 1 through FIG. 7, where similar reference characters denote corresponding features consistently throughout the figures, there are shown preferred embodiments and these embodiments are described in the context of the following exemplary system and/or method.

FIG. 1 illustrates a block diagram of a system 100 for recommending optimum configurations in industrial control systems for improving quality of product, in accordance with an example embodiment. Although the present disclosure is explained considering that the system 100 is implemented on a server, it may be understood that the system 100 may comprise one or more computing devices 102, such as a laptop computer, a desktop computer, a notebook, a workstation,

a cloud-based computing environment and the like. It will be understood that the system 100 may be accessed through one or more input/output interfaces 104-1, 104-2... 104-N, collectively referred to as I/O interface 104. Examples of the I/O interface 104 may include, but are not limited to, a user interface, a portable computer, a personal digital assistant, a handheld device, a smartphone, a tablet computer, a workstation, and the like. The I/O interface 104 are communicatively coupled to the system 100 through a network 106.

In an embodiment, the network 106 may be a wireless or a wired network, or a combination thereof. In an example, the network 106 can be implemented as a computer network, as one of the different types of networks, such as virtual private network (VPN), intranet, local area network (LAN), wide area network (WAN), the internet, and such. The network 106 may either be a dedicated network or a shared network, which represents an association of the different types of networks that use a variety of protocols, for example, Hypertext Transfer Protocol (HTTP), Transmission Control Protocol/Internet Protocol (TCP/IP), and Wireless Application Protocol (WAP), to communicate with each other. Further, the network 106 may include a variety of network devices, including routers, bridges, servers, computing devices, storage devices. The network devices within the network 106 may interact with the system 100 through communication links.

The system 100 supports various connectivity options such as BLUETOOTH®, USB, ZigBee, and other cellular services. The network environment enables connection of various components of the system 100 using any communication link including Internet, WAN, MAN, and so on. In an exemplary embodiment, the system 100 is implemented to operate as a stand-alone device. In another embodiment, the system 100 may be implemented to work as a loosely coupled device to a smart computing environment. Further, the system 100 comprises at least one memory 110 with a plurality of instructions, one or more databases 112, and one or more hardware processors 108 which are communicatively coupled with the at least one memory to execute a plurality of modules 114 therein. The plurality of modules 114, for example, includes a multilayer perceptron module 202, and an optimization module 204. The components and functionalities of the system 100 are described further in detail.

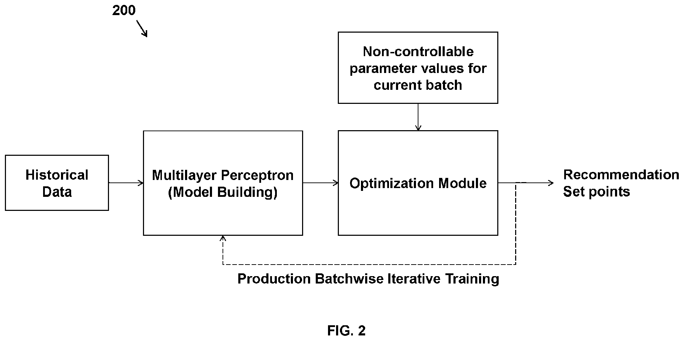

FIG. 2 is a functional block diagram of an example system 200 to recommend optimum configurations in industrial control systems implemented by the system 100 of FIG. 1, according to some embodiments of the present disclosure. It is to be noted that the recommended set points are sent to operator of plant who may override these based on his domain expertise. The actual set points for plant along with updated quality score , after next batch run, is fed back to a model building module to retrain the model.

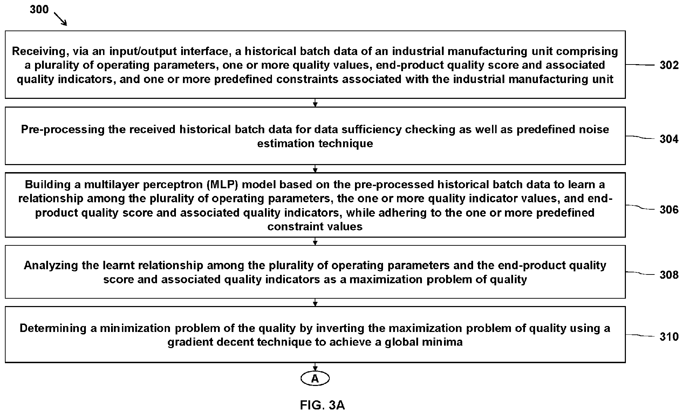

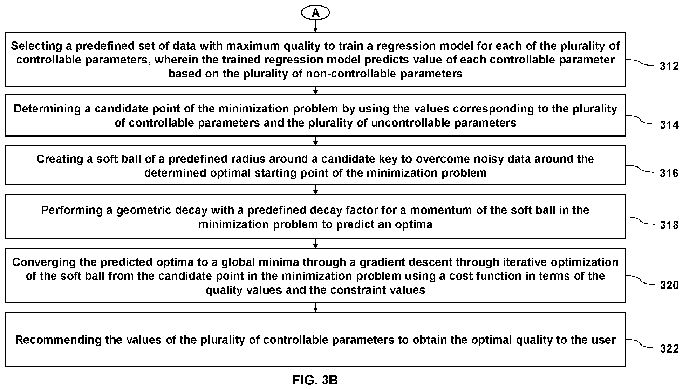

FIG. 3A and 3B (collectively referred as FIG. 3) are exemplary flow diagrams illustrating a processor-implemented method 300 for recommending optimum configurations in industrial control systems implemented by the system 100 of FIG. 1. Functions of the components of the system 100 are now explained with reference to FIG. 2 through steps of flow diagram in FIG. 3, according to some embodiments of the present disclosure.

In an embodiment, the system 100 comprises one or more data storage devices or the memory 102 operatively coupled to the processor(s) 108 and is configured to store instructions for execution of steps of the method 300 by the processor(s) or one or more hardware processors 108. The steps of the method 300 of the present disclosure will now be explained with reference to the components or blocks of the system 100 as depicted in FIG. 1 and 2 and the steps of flow diagram as depicted in FIG. 3. Although process steps, method steps, techniques or the like may be described in a sequential order, such processes, methods, and techniques may be configured to work in alternate orders. In other words, any sequence or order of steps that may be described does not necessarily indicate a requirement that the steps to be performed in that order. The steps of processes described herein may be performed in any order practical. Further, some steps may be performed simultaneously.

Initially, at step 302 of the processor-implemented method 300, the one or more hardware processors 108 are configured by the programmed instructions to receive, via an input/output interface 104, a historical batch data of an industrial manufacturing unit. The historical data comprising a plurality of operating parameters, one or more quality values, end product quality score and associated quality indicators, and one or more predefined constraints associated with the industrial manufacturing unit. The plurality of operating parameters comprises a plurality of controllable parameters and a plurality of uncontrollable parameters.

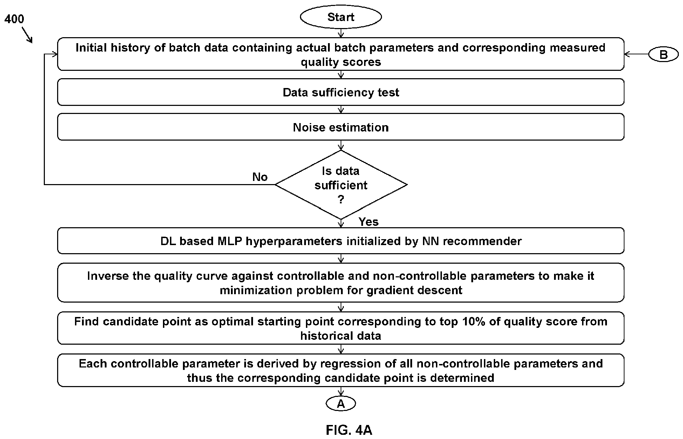

At the next step 304 of the processor-implemented method 300, the one or more hardware processors 108 are configured by the programmed instructions to pre-process the received historical batch data for data sufficiency checking as well as predefined noise estimation technique. It is to be noted that the data sufficiency is an indicator of a probability of improvement on available data. State of the art data preprocessing techniques like null check and removal, duplicate row removal, data scaling, data formatting in dataset as required for numeric computation are used. Based on the given historical data points various regression lines can be drawn satisfying the given data, but the curves will have significant variations in the region of non-sufficient data points and that standard deviation with respect to the mean value becomes an indicator of data insufficiency. Noise estimation is done by checking the data points are withing range of certain threshold values, set by domain experts as shown in FIG. 4A.

At the next step 306 of the processor-implemented method 300, the one or more hardware processors 108 are configured by the programmed instructions to build a multilayer perceptron (MLP) model based on the pre-processed historical batch data to learn a relationship among the plurality of operating parameters, the one or more quality indicator

values, and end product quality score and associated quality indicators, while adhering to the one or more predefined constraint values. For example in cigarette production the production area humidity is set at 65-68%RH. The tobacco starts to lose moisture and becomes dry if the humidity falls below about 60%RH. This can result in the tobacco to fall off the cigarette tip when it is held upside down. The moisture addition can result in staining on the paper if the humidity exceeds 70%, thus making it unacceptable to the end client.

At the next step 308 of the processor-implemented method 300, the one or more hardware processors 108 are configured by the programmed instructions to analyze the learnt relationship among the plurality of operating parameters and the end product quality score and associated quality indicators as a maximization problem of quality. For example quality of Tea is often graded and rated by expert tea testers on a certain scale based on quality indicators like Liquor and Flavor. The quality indicators vary for variation of tea like Assam Tea and Darjeeling Tea.

At the next step 310 of the processor-implemented method 300, the one or more hardware processors 108 are configured by the programmed instructions to determine a minimization problem of the quality by inverting the maximization problem of quality to achieve a global minima using a gradient descent technique.

At the next step 312 of the processor-implemented method 300, the one or more hardware processors 108 are configured by the programmed instructions to select a predefined set of data with maximum quality corresponding to top 10-15% of quality score to train a regression model for each of the plurality of controllable parameters using all the non-controllable parameters, the regression model may be generated by state of the art regression technique like Random Forest Regression. The trained regression model predicts value of each controllable parameter based on the plurality of non-controllable parameters.

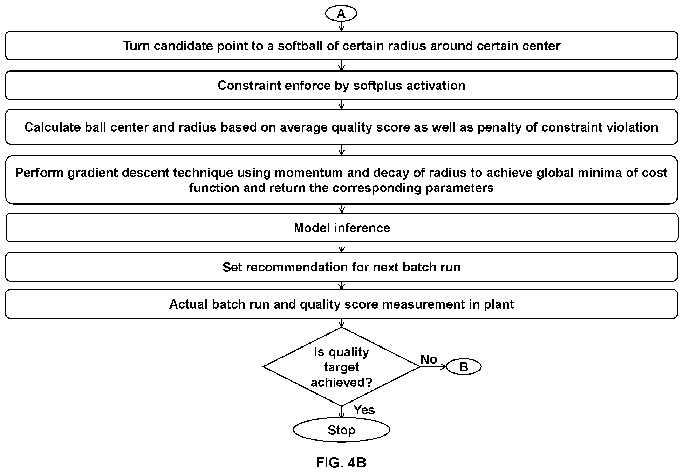

At the next step 314 of the processor-implemented method 300, the one or more hardware processors 108 are configured by the programmed instructions to determine a candidate point, as the starting point for gradient descent technique, of the minimization problem by using the values corresponding to the plurality of controllable parameters and the plurality of uncontrollable parameters. Herein, a domain specific constraint is enforced in the minimization problem while applying the momentum based iterative optimization of the soft ball from the candidate point as shown in FIG. 4B.

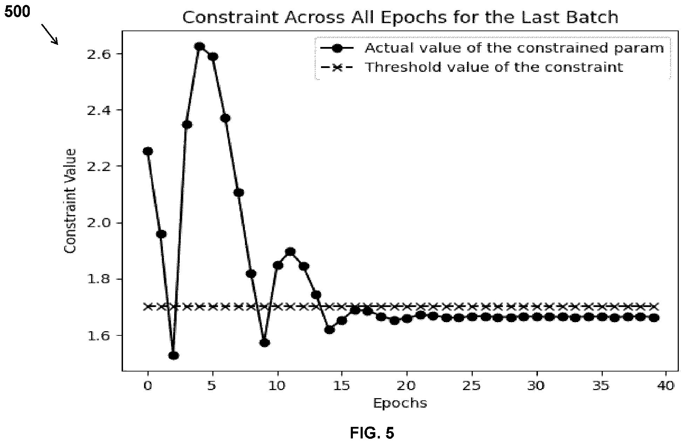

For example in cigarette production the production area humidity is set at 65-68% relative humidity that is a domain specific constraint. Due to this constraint the process parameters cannot cross the threshold even if higher quality is achievable, rather the parameters need to settle within allowable range to achieve an optimum quality. Also the constraints settle down much near to the threshold level over iterations, as per FIG. 5 showing last batch of 40 iterations, although it still violates by a narrow margin. In practice the constraints are taken more stringent so that even slight variation from recommended constraint does not impact manufacturing system.

At the next step 316 of the processor-implemented method 300, the one or more hardware processors 108 are configured by the programmed instructions to create a soft ball of a predefined radius around a candidate key to overcome noisy data around the determined optimal starting point of the minimization problem.

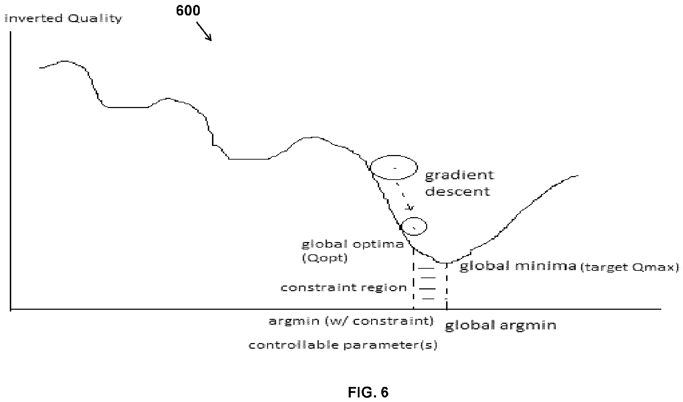

FIG. 6 is a schematic diagram to illustrate recommendation mechanism considering maximum quality without violating any constraint. The ball radius is chosen such that the 99.7% of data falls within the circle (ball) with practical assumption that data points are normally (Gaussian) distributed. Larger radius would cause higher robustness to noise, but too large radius may make the improvement process unstable. It is to be noted that not only to overcome noisy data at starting candidate point, but all along the path towards global minima, in each epoch the candidates points may evolve based on gradient descent technique based on disclosed cost function to converge to global minima. The cost function defined as:

Cost function = average negative quality at the balls surface + average (softplus (constraint threshold - value of constraints) at balls surface) (1)

wherein softplus is an activation function. The recommendation points are retrieved which correspond to the perceived optima as per following equation to minimize sum of inverted quality and cost of constraint violation:

$$recommendation = \underset{ballcenter}{\overset{argmin}{}} [average(negative\ quality\ at\ the\ ball\ surface) + average(softplus(contraint\ value\ at\ ball\ surface)] \quad (2)$$

At the next step 318 of the processor-implemented method 300, the one or more hardware processors 108 are configured by the programmed instructions to perform a geometric decay with a predefined decay factor for a momentum of the soft ball in the minimization problem to predict an optima. A soft ball is created around the candidate point as a bigger ball will be able to overcome local minima and converge to global minima. Thus, the method becomes robust to uneven/non-smooth curves caused by real-life noisy data. Sample from a spherical gaussian distribution is used to simulate the ball. However, as the ball rolls down toward global maxima, the radius of the ball is decayed as a bigger ball might get stuck in opposite slope. The radius of the ball and the exponential decay factor is use case specific hyper

parameters and are to be set by experimentation. There is scope to improve the recommendation model considering the next run successive batch data to retrain the original MLP or ensemble of MLPs with new data set after getting minimum number of feedbacks.

In the present disclosure, consider the initial radius of the ball as 0.1 and perform a geometric decay with decay rate of 0.01 per downward step. The momentum (existing state of the art technique) is used as a method of exploration to get better idea about the optima and to get across local minima. Using momentum with gradient descent, gradients from the past is taken care as a weighted moving average to push the cost further to move around a saddle point, thus reaching the global minima eventually.

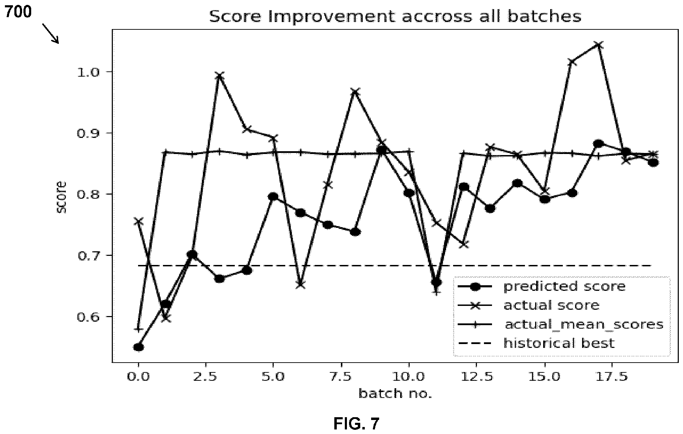

At the next step 320 of the processor-implemented method 300, the one or more hardware processors 108 are configured by the programmed instructions to converge the predicted optima to a global minima through a gradient descent through iterative optimization of the soft ball from the candidate point in the minimization problem using a cost function in terms of the quality values and the constraint values as shown in FIG. 7.

Finally, at the last step 322 of the processor-implemented method 300, the one or more hardware processors 108 are configured by the programmed instructions to recommend the values of the plurality of controllable parameters to obtain the optimal quality to the user.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein address unresolved problem of getting optimum quality of product while changing operating conditions and raw material frequently in an industrial manufacturing process. Embodiments herein provide a method and system for recommending optimum configurations in industrial control systems for improving quality of product. The system is configured to automate improvement over existing golden batch with a data driven approach and replace need of random experimentation with very minimal systematic experiments. The system ensures that no constraint violations are made, and the system remains stable even when data is noisy. Further, the system recommends values of parameters so that improvement in quality is achieved. The changes in parameter value should be gradual even if the historical data received from feedback is noisy.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments

consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

**1.** A processor-implemented method (300), comprising:
receiving (302), via an input/output interface, a historical batch data of an industrial manufacturing unit comprising a plurality of operating parameters, one or more quality values, end product quality score and associated quality indicators, and one or more predefined constraints associated with the industrial manufacturing unit, wherein the plurality of operating parameters comprise a plurality of controllable parameters and a plurality of uncontrollable parameters, **characterized in that**:

pre-processing (304), via one or more hardware processors, the received historical batch data for data sufficiency check and noise estimation, wherein the data sufficiency is an indicator of a probability of improvement on available data;
building (306), via the one or more hardware processors, a multilayer perceptron (MLP) model based on the pre-processed historical batch data to learn a relationship among the plurality of operating parameters, the one or more quality indicator values, and end product quality score and associated quality indicators, while adhering to the one or more predefined constraint values;
analyzing (308), via the one or more hardware processors, the learnt relationship among the plurality of operating parameters and the end product quality score and associated quality indicators as a maximization problem of a quality;
determining (310), via the one or more hardware processors, a minimization problem of the quality by inverting the maximization problem of the quality using a gradient descent technique to achieve a global minima;
selecting (312), via the one or more hardware processors, a predefined set of data with maximum quality to train a regression model for each of the plurality of controllable parameters, wherein the trained regression model predicts value of each controllable parameter based on the plurality of non-controllable parameters;
determining (314), via the one or more hardware processors, a candidate point of the minimization problem by using the values corresponding to the plurality of controllable parameters and the plurality of uncontrollable parameters;
creating (316), via the one or more hardware processors, a soft ball of a predefined radius around a candidate key to overcome noisy data around the determined optimal starting point of the minimization problem;
performing (318), via the one or more hardware processors, a geometric decay with a predefined decay factor for a momentum of the soft ball in the minimization problem to predict an optimal quality for the values of the plurality of controllable parameters;
converging (320), via one or more hardware processors, the predicted optima to a global minima through a gradient descent through iterative optimization of the soft ball from the candidate point in the minimization problem using a cost function in terms of the quality values and the constraint values; and
recommending (322), via the one or more hardware processors, the values of the plurality of controllable parameters to obtain the optimal quality from the industrial manufacturing unit.

**2.** The processor-implemented method (300) as claimed in claim 1, wherein domain specific constraint is enforced in the minimization problem while applying the momentum based iterative optimization of the soft ball from the candidate point.

**3.** The processor-implemented method (300) as claimed in claim 1, wherein the historical batch data is annotated with a domain specific labels.

**4.** The processor-implemented method (300) as claimed in claim 1, wherein a spherical gaussian distribution technique is used to simulate the created soft ball.

5. The processor-implemented method (300) as claimed in claim 1, wherein the cost function is resultant sum of a mean squared error (MSE) of negative loss function of quality score and soft plus function of defined constraints.

6. A system (100) comprising:

an input/output interface (104), to receive a historical batch data of an industrial manufacturing unit comprising a plurality of operating parameters, one or more quality values, end product quality score and associated quality indicators, and one or more predefined constraints associated with the industrial manufacturing unit;
a memory (110) in communication with the one or more hardware processors (108), wherein the one or more hardware processors (108) are configured to execute programmed instructions stored in the memory to:
pre-process the received historical batch data for data sufficiency check and noise estimation, wherein the data sufficiency is an indicator of a probability of improvement on the available data, **characterized in that**:

build a multilayer perceptron (MLP) model based on the pre-processed historical batch data to learn a relationship among the plurality of operating parameters, the one or more quality values, and end product quality score and associated quality indicators, while adhering to the one or more predefined constraint values, wherein the historical batch data is annotated with a domain specific labels;
analyze the learnt relationship among the plurality of operating parameters and the end product quality score and associated quality indicators as a maximization problem of a quality;
determine a minimization problem of the quality by converting the maximization problem of quality using a gradient descent technique to achieve a global minima;
select a predefined set of data with maximum quality to train a regression model for each of the plurality of controllable parameters, wherein the trained regression model predicts value of each controllable parameter based on the plurality of non-controllable parameters;
determine a candidate point of the minimization problem by using the values corresponding to the plurality of controllable parameters and the plurality of uncontrollable parameters;
create a soft ball of a predefined radius around a candidate key to overcome noisy data around the determined optimal starting point of the minimization problem, wherein a spherical gaussian distribution technique is used to simulate the created soft ball;
perform a geometric decay with a predefined decay factor for a momentum of the soft ball in the minimization problem to predict an optimal quality for the values of the plurality of controllable parameters;
converge the predicted optima to a global minima through a gradient descent through iterative optimization of the soft ball from the candidate point in the minimization problem using a cost function in terms of the quality values and the constraint values, wherein the cost function is resultant sum of a mean squared error (MSE) of negative loss function of quality score and soft plus function of defined constraints; and
recommend the values of the plurality of controllable parameters to obtain the optimal quality from the industrial manufacturing unit.

7. The system (100) as claimed in claim 6, wherein a domain specific constraint is enforced in the minimization problem while applying the momentum based iterative optimization of the soft ball from the candidate point.

8. The system (100) as claimed in claim 6, wherein the historical batch data is annotated with a domain specific labels.

9. The system (100) as claimed in claim 6, wherein a spherical gaussian distribution technique is used to simulate the created soft ball.

10. The system (100) as claimed in claim 7, wherein the cost function is resultant sum of a Mean Squared Error (MSE) of negative loss function of quality score and soft plus function of defined constraints.

11. One or more non-transitory machine-readable information storage mediums comprising one or more instructions which when executed by one or more hardware processors cause:
receiving, via an input/output interface, a historical batch data of an industrial manufacturing unit comprising a plurality of operating parameters, one or more quality values, end product quality score and associated quality indicators, and one or more predefined constraints associated with the industrial manufacturing unit, wherein the plurality of operating parameters comprise a plurality of controllable parameters and a plurality of uncontrollable parameters, **characterized in that**:

pre-processing, via one or more hardware processors, the received historical batch data for data sufficiency

check and noise estimation, wherein the data sufficiency is an indicator of a probability of improvement on available data;
building, via the one or more hardware processors, a multilayer perceptron (MLP) model based on the pre-processed historical batch data to learn a relationship among the plurality of operating parameters, the one or more quality indicator values, and end product quality score and associated quality indicators, while adhering to the one or more predefined constraint values;
analyzing, via the one or more hardware processors, the learnt relationship among the plurality of operating parameters and the end product quality score and associated quality indicators as a maximization problem of a quality;
determining, via the one or more hardware processors, a minimization problem of the quality by inverting the maximization problem of the quality using a gradient descent technique to achieve a global minima;
selecting, via the one or more hardware processors, a predefined set of data with maximum quality to train a regression model for each of the plurality of controllable parameters, wherein the trained regression model predicts value of each controllable parameter based on the plurality of non-controllable parameters;
determining, via the one or more hardware processors, a candidate point of the minimization problem by using the values corresponding to the plurality of controllable parameters and the plurality of uncontrollable parameters;
creating, via the one or more hardware processors, a soft ball of a predefined radius around a candidate key to overcome noisy data around the determined optimal starting point of the minimization problem;
performing, via the one or more hardware processors, a geometric decay with a predefined decay factor for a momentum of the soft ball in the minimization problem to predict an optimal quality for the values of the plurality of controllable parameters ;
converging, via one or more hardware processors, the predicted optima to a global minima through a gradient descent through iterative optimization of the soft ball from the candidate point in the minimization problem using a cost function in terms of the quality values and the constraint values; and
recommending, via the one or more hardware processors, the values of the plurality of controllable parameters to obtain the optimal quality from the industrial manufacturing unit.

**12.** The one or more non-transitory machine-readable information storage mediums of claim 11, wherein domain specific constraint is enforced in the minimization problem while applying the momentum based iterative optimization of the soft ball from the candidate point.

**13.** The one or more non-transitory machine-readable information storage mediums of claim 11, wherein a spherical gaussian distribution technique is used to simulate the created soft ball.

## Patentansprüche

**1.** Prozessorimplementiertes Verfahren (300), umfassend:
Empfangen (302), über eine Eingabe-/Ausgabeschnittstelle, von historischen Chargendaten einer industriellen Fertigungseinheit, umfassend eine Mehrzahl von Betriebsparametern, einen oder mehrere Qualitätswerte, eine Endproduktqualitätsbewertung und assoziierte Qualitätsindikatoren, und eine oder mehrere vordefinierte Beschränkungen, die mit der industriellen Fertigungseinheit assoziiert sind, wobei die Mehrzahl von Betriebsparametern eine Mehrzahl von steuerbaren Parametern und eine Mehrzahl von nicht steuerbaren Parametern umfasst, **dadurch gekennzeichnet, dass**:

Vorverarbeiten (304), über einen oder mehrere Hardwareprozessoren, der empfangenen historischen Chargendaten zur Datenausreichendkeitsprüfung und Rauschschätzung, wobei die Datenausreichendkeit ein Indikator einer Verbesserungswahrscheinlichkeit von verfügbaren Daten ist;
Aufbauen (306), über den einen oder die mehreren Hardwareprozessoren, eines mehrschichtigen Perzeptron (MLP)-Modells basierend auf den vorverarbeiteten historischen Chargendaten, um eine Beziehung zwischen der Mehrzahl von Betriebsparametern, dem einen oder den mehreren Qualitätsindikatorwerten und der Endproduktqualitätsbewertung und assoziierten Qualitätsindikatoren zu lernen, während der eine oder die mehreren vordefinierten Beschränkungswerte eingehalten werden;
Analysieren (308), über den einen oder die mehreren Hardwareprozessoren, der gelernten Beziehung zwischen der Mehrzahl von Betriebsparametern und der Endproduktqualitätsbewertung und assoziierten Qualitätsindikatoren als ein Maximierungsproblem einer Qualität;
Bestimmen (310), über den einen oder die mehreren Hardwareprozessoren, Minimierungsproblems der Qualität durch Invertieren des Maximierungsproblems der Qualität unter Verwendung einer Gradientenabstiegstechnik,

um ein globales Minimum zu erreichen;
Auswählen (312), über den einen oder die mehreren Hardwareprozessoren, eines vordefinierten Satzes von Daten mit maximaler Qualität, um ein Regressionsmodell für jeden der Mehrzahl von steuerbaren Parametern zu trainieren, wobei das trainierte Regressionsmodell einen Wert jedes steuerbaren Parameters basierend auf der Mehrzahl von nicht steuerbaren Parametern vorhersagt;
Bestimmen (314), über den einen oder die mehreren Hardwareprozessoren, eines Kandidatenpunkts des Minimierungsproblems durch Verwenden der Werte, die der Mehrzahl von steuerbaren Parametern und der Mehrzahl von nicht steuerbaren Parametern entsprechen;
Erzeugen (316), über den einen oder die mehreren Hardwareprozessoren, einer weichen Kugel mit einem vordefinierten Radius um einen Kandidatenschlüssel, um verrauschte Daten um den bestimmten optimalen Startpunkt des Minimierungsproblems zu überwinden;
Durchführen (318), über den einen oder die mehreren Hardwareprozessoren, eines geometrischen Zerfalls mit einem vordefinierten Zerfallsfaktor für einen Impuls der weichen Kugel in dem Minimierungsproblem, um eine optimale Qualität für die Werte der Mehrzahl von steuerbaren Parametern vorherzusagen;
Konvergieren (320), über einen oder mehrere Hardwareprozessoren, der vorhergesagten Optima auf ein globales Minimum durch einen Gradientenabstieg durch iterative Optimierung der weichen Kugel von dem Kandidatenpunkt in dem Minimierungsproblem unter Verwendung einer Kostenfunktion in Bezug auf die Qualitätswerte und die Beschränkungswerte; und
Empfehlen (322), über den einen oder die mehreren Hardwareprozessoren, der Werte der Mehrzahl von steuerbaren Parametern, um die optimale Qualität von der industriellen Fertigungseinheit zu erhalten.

**2.** Prozessorimplementiertes Verfahren (300) nach Anspruch 1, wobei domänenspezifische Beschränkung in dem Minimierungsproblem durchgesetzt wird, während die impulsbasierte iterative Optimierung der weichen Kugel von dem Kandidatenpunkt angewendet wird.

**3.** Prozessorimplementiertes Verfahren (300) nach Anspruch 1, wobei die historischen Chargendaten mit domänenspezifischen Labels kommentiert werden.

**4.** Prozessorimplementiertes Verfahren (300) nach Anspruch 1, wobei eine sphärische Gaußsche Verteilungstechnik verwendet wird, um die erzeugte weiche Kugel zu simulieren.

**5.** Prozessorimplementiertes Verfahren (300) nach Anspruch 1, wobei die Kostenfunktion die resultierende Summe eines mittleren quadratischen Fehlers (MSE) einer negativen Verlustfunktion der Qualitätsbewertung und einer weichen Plus-Funktion von definierten Beschränkungen ist.

**6.** System (100), umfassend:

eine Eingabe-/Ausgabeschnittstelle (104), um historische Chargendaten einer industriellen Fertigungseinheit zu empfangen, umfassend eine Mehrzahl von Betriebsparametern, einen oder mehrere Qualitätswerte, eine Endproduktqualitätsbewertung und assoziierte Qualitätsindikatoren, und eine oder mehrere vordefinierte Beschränkungen, die mit der industriellen Fertigungseinheit assoziiert sind;
einen Speicher (110) in Kommunikation mit dem einen oder den mehreren Hardwareprozessoren (108), wobei der eine oder die mehreren Hardwareprozessoren (108) konfiguriert sind, um programmierte Anweisungen auszuführen, die in dem Speicher gespeichert sind, um:
die empfangenen historischen Chargendaten zur Datenausreichendkeitsprüfung und Rauschschätzung vorzuverarbeiten, wobei die Datenausreichendkeit ein Indikator einer Verbesserungswahrscheinlichkeit der verfügbaren Daten ist, **dadurch gekennzeichnet, dass**:

ein mehrschichtiges Perzeptron (MLP)-Modell basierend auf den vorverarbeiteten historischen Chargendaten aufzubauen, um eine Beziehung zwischen der Mehrzahl von Betriebsparametern, dem einen oder den mehreren Qualitätswerten und der Endproduktqualitätsbewertung und assoziierten Qualitätsindikatoren zu lernen, während der eine oder die mehreren vordefinierten Beschränkungswerte eingehalten werden, wobei die historischen Chargendaten mit domänenspezifischen Labels kommentiert werden;
die gelernte Beziehung zwischen der Mehrzahl von Betriebsparametern und der Endproduktqualitätsbewertung und assoziierten Qualitätsindikatoren als ein Maximierungsproblem einer Qualität zu analysieren;
ein Minimierungsproblem der Qualität durch Umwandeln des Maximierungsproblems der Qualität unter Verwendung einer Gradientenabstiegstechnik zu bestimmen, um ein globales Minimum zu erreichen;
einen vordefinierten Satz von Daten mit maximaler Qualität auszuwählen, um ein Regressionsmodell für

jeden der Mehrzahl von steuerbaren Parametern zu trainieren, wobei das trainierte Regressionsmodell einen Wert jedes steuerbaren Parameters basierend auf der Mehrzahl von nicht steuerbaren Parametern vorhersagt;
einen Kandidatenpunkt des Minimierungsproblems durch Verwenden der Werte, die der Mehrzahl von steuerbaren Parametern und der Mehrzahl von nicht steuerbaren Parametern entsprechen, zu bestimmen;
eine weiche Kugel mit einem vordefinierten Radius um einen Kandidatenschlüssel zu erzeugen, um verrauschte Daten um den bestimmten optimalen Startpunkt des Minimierungsproblems zu überwinden, wobei eine sphärische Gaußsche Verteilungstechnik verwendet wird, um die erzeugte weiche Kugel zu simulieren;
einen geometrischen Zerfall mit einem vordefinierten Zerfallsfaktor für einen Impuls der weichen Kugel in dem Minimierungsproblem durchzuführen, um eine optimale Qualität für die Werte der Mehrzahl von steuerbaren Parametern vorherzusagen;
die vorhergesagten Optima auf ein globales Minimum durch einen Gradientenabstieg durch iterative Optimierung der weichen Kugel von dem Kandidatenpunkt in dem Minimierungsproblem unter Verwendung einer Kostenfunktion in Bezug auf die Qualitätswerte und die Beschränkungswerte zu konvergieren, wobei die Kostenfunktion die resultierende Summe eines mittleren quadratischen Fehlers (MSE) einer negativen Verlustfunktion der Qualitätsbewertung und einer weichen Plus-Funktion von definierten Beschränkungen ist; und
die Werte der Mehrzahl von steuerbaren Parametern zu empfehlen, um die optimale Qualität von der industriellen Fertigungseinheit zu erhalten.

7. System (100) nach Anspruch 6, wobei eine domänenspezifische Beschränkung in dem Minimierungsproblem durchgesetzt wird, während die impulsbasierte iterative Optimierung der weichen Kugel von dem Kandidatenpunkt angewendet wird.

8. System (100) nach Anspruch 6, wobei die historischen Chargendaten mit domänenspezifischen Labels kommentiert werden.

9. System (100) nach Anspruch 6, wobei eine sphärische Gaußsche Verteilungstechnik verwendet wird, um die erzeugte weiche Kugel zu simulieren.

10. System (100) nach Anspruch 7, wobei die Kostenfunktion die resultierende Summe eines mittleren quadratischen Fehlers (MSE) einer negativen Verlustfunktion der Qualitätsbewertung und einer weichen Plus-Funktion von definierten Beschränkungen ist.

11. Ein oder mehrere nichtflüchtige maschinenlesbare Informationsspeichermedien, die eine oder mehrere Anweisungen umfassen, die, wenn sie von einem oder mehreren Hardwareprozessoren ausgeführt werden, Folgendes bewirken:
Empfangen, über eine Eingabe-/Ausgabeschnittstelle, von historischen Chargendaten einer industriellen Fertigungseinheit, umfassend eine Mehrzahl von Betriebsparametern, einen oder mehrere Qualitätswerte, eine Endproduktqualitätsbewertung und assoziierte Qualitätsindikatoren, und eine oder mehrere vordefinierte Beschränkungen, die mit der industriellen Fertigungseinheit assoziiert sind, wobei die Mehrzahl von Betriebsparametern eine Mehrzahl von steuerbaren Parametern und eine Mehrzahl von nicht steuerbaren Parametern umfasst, **dadurch gekennzeichnet, dass**:

Vorverarbeiten, über einen oder mehrere Hardwareprozessoren, der empfangenen historischen Chargendaten zur Datenausreichendkeitsprüfung und Rauschschätzung, wobei die Datenausreichendkeit ein Indikator einer Verbesserungswahrscheinlichkeit von verfügbaren Daten ist;
Aufbauen, über den einen oder die mehreren Hardwareprozessoren, eines mehrschichtigen Perzeptron (MLP)-Modells basierend auf den vorverarbeiteten historischen Chargendaten, um eine Beziehung zwischen der Mehrzahl von Betriebsparametern, dem einen oder den mehreren Qualitätsindikatorwerten und der Endproduktqualitätsbewertung und assoziierten Qualitätsindikatoren zu lernen, während der eine oder die mehreren vordefinierten Beschränkungswerte eingehalten werden;
Analysieren, über den einen oder die mehreren Hardwareprozessoren, der gelernten Beziehung zwischen der Mehrzahl von Betriebsparametern und der Endproduktqualitätsbewertung und assoziierten Qualitätsindikatoren als ein Maximierungsproblem einer Qualität;
Bestimmen, über den einen oder die mehreren Hardwareprozessoren, eines Minimierungsproblems der Qualität durch Invertieren des Maximierungsproblems der Qualität unter Verwendung einer Gradientenabstiegstechnik,

um ein globales Minimum zu erreichen;
Auswählen, über den einen oder die mehreren Hardwareprozessoren, eines vordefinierten Satzes von Daten mit maximaler Qualität, um ein Regressionsmodell für jeden der Mehrzahl von steuerbaren Parametern zu trainieren, wobei das trainierte Regressionsmodell einen Wert jedes steuerbaren Parameters basierend auf der Mehrzahl von nicht steuerbaren Parametern vorhersagt;
Bestimmen, über den einen oder die mehreren Hardwareprozessoren, eines Kandidatenpunkts des Minimierungsproblems durch Verwenden der Werte, die der Mehrzahl von steuerbaren Parametern und der Mehrzahl von nicht steuerbaren Parametern entsprechen;
Erzeugen, über den einen oder die mehreren Hardwareprozessoren, einer weichen Kugel mit einem vordefinierten Radius um einen Kandidatenschlüssel, um verrauschte Daten um den bestimmten optimalen Startpunkt des Minimierungsproblems zu überwinden;
Durchführen, über den einen oder die mehreren Hardwareprozessoren, eines geometrischen Zerfalls mit einem vordefinierten Zerfallsfaktor für einen Impuls der weichen Kugel in dem Minimierungsproblem, um eine optimale Qualität für die Werte der Mehrzahl von steuerbaren Parametern vorherzusagen;
Konvergieren, über einen oder mehrere Hardwareprozessoren, der vorhergesagten Optima auf ein globales Minimum durch einen Gradientenabstieg durch iterative Optimierung der weichen Kugel von dem Kandidatenpunkt in dem Minimierungsproblem unter Verwendung einer Kostenfunktion in Bezug auf die Qualitätswerte und die Beschränkungswerte; und
Empfehlen, über den einen oder die mehreren Hardwareprozessoren, der Werte der Mehrzahl von steuerbaren Parametern, um die optimale Qualität von der industriellen Fertigungseinheit zu erhalten.

**12.** Ein oder mehrere nichtflüchtige maschinenlesbare Informationsspeichermedien nach Anspruch 11, wobei domänenspezifische Beschränkung in dem Minimierungsproblem durchgesetzt wird, während die impulsbasierte iterative Optimierung der weichen Kugel von dem Kandidatenpunkt angewendet wird.

**13.** Ein oder mehrere nichtflüchtige maschinenlesbare Informationsspeichermedien nach Anspruch 11, wobei eine sphärische Gaußsche Verteilungstechnik verwendet wird, um die erzeugte weiche Kugel zu simulieren.

## Revendications

**1.** Procédé mis en œuvre par processeur (300), comprenant :
la réception (302), par l'intermédiaire d'une interface d'entrée/sortie, de données de lots historiques d'une unité de fabrication industrielle comprenant une pluralité de paramètres de fonctionnement, une ou plusieurs valeurs de qualité, un score de qualité du produit final et des indicateurs de qualité associés, et une ou plusieurs contraintes prédéfinies associées à l'unité de fabrication industrielle, dans lequel la pluralité de paramètres de fonctionnement comprend une pluralité de paramètres contrôlables et une pluralité de paramètres non contrôlables, **caractérisé en ce que** :

le prétraitement (304), par l'intermédiaire d'un ou plusieurs processeurs matériels, des données de lots historiques reçues pour un contrôle de suffisance des données et une estimation du bruit, dans lequel la suffisance de données est un indicateur d'une probabilité d'amélioration sur des données disponibles ;
la construction (306), par l'intermédiaire des un ou plusieurs processeurs matériels, d'un modèle de perceptron multicouche (MLP) sur la base des données de lots historiques prétraitées pour apprendre une relation parmi la pluralité de paramètres de fonctionnement, les une ou plusieurs valeurs d'indicateur de qualité, et un score de qualité du produit final et des indicateurs de qualité associés, tout en respectant les une ou plusieurs valeurs de contrainte prédéfinies ;
l'analyse (308), par l'intermédiaire des un ou plusieurs processeurs matériels, de la relation apprise parmi la pluralité de paramètres de fonctionnement et du score de qualité du produit final et des indicateurs de qualité associés en tant que problème de maximisation d'une qualité ;
la détermination (310), par l'intermédiaire des un ou plusieurs processeurs matériels, d'un problème de minimisation de la qualité en inversant le problème de maximisation de la qualité en utilisant une technique de descente de gradient pour atteindre un minimum global ;
la sélection (312), par l'intermédiaire des un ou plusieurs processeurs matériels, d'un ensemble prédéfini de données avec une qualité maximale pour entraîner un modèle de régression pour chacun de la pluralité de paramètres contrôlables, dans lequel le modèle de régression entraîné prédit une valeur de chaque paramètre contrôlable sur la base de la pluralité de paramètres non contrôlables ;
la détermination (314), par l'intermédiaire des un ou plusieurs processeurs matériels, d'un point candidat du

problème de minimisation en utilisant les valeurs correspondant à la pluralité de paramètres contrôlables et à la pluralité de paramètres non contrôlables ;
la création (316), par l'intermédiaire des un ou plusieurs processeurs matériels, d'une boule souple d'un rayon prédéfini autour d'une clé candidate pour surmonter des données bruyantes autour du point de départ optimal déterminé du problème de minimisation ;
la réalisation (318), par l'intermédiaire des un ou plusieurs processeurs matériels, d'une décroissance géométrique avec un facteur de décroissance prédéfini pour un momentum de la boule souple dans le problème de minimisation pour prédire une qualité optimale pour les valeurs de la pluralité de paramètres contrôlables ;
la convergence (320), par l'intermédiaire des un ou plusieurs processeurs matériels, de l'optimum prédit vers un minimum global au moyen d'une descente de gradient via une optimisation itérative de la boule souple à partir du point candidat dans le problème de minimisation en utilisant une fonction de coût en termes des valeurs de qualité et des valeurs de contrainte ; et
la recommandation (322), par l'intermédiaire des un ou plusieurs processeurs matériels, des valeurs de la pluralité de paramètres contrôlables pour obtenir la qualité optimale à partir de l'unité de fabrication industrielle.

**2.** Procédé mis en œuvre par processeur (300) selon la revendication 1, dans lequel une contrainte spécifique au domaine est appliquée dans le problème de minimisation tout en appliquant l'optimisation itérative basée sur le momentum de la boule souple à partir du point candidat.

**3.** Procédé mis en œuvre par processeur (300) selon la revendication 1, dans lequel les données de lots historiques sont annotées avec des étiquettes spécifiques au domaine.

**4.** Procédé mis en œuvre par processeur (300) selon la revendication 1, dans lequel une technique de distribution gaussienne sphérique est utilisée pour simuler la boule souple créée.

**5.** Procédé mis en œuvre par processeur (300) selon la revendication 1, dans lequel la fonction de coût est la somme résultante d'une erreur quadratique moyenne (MSE) d'une fonction de perte négative de score de qualité et d'une fonction softplus de contraintes définies.

**6.** Système (100) comprenant :

une interface d'entrée/sortie (104), pour recevoir des données de lots historiques d'une unité de fabrication industrielle comprenant une pluralité de paramètres de fonctionnement, une ou plusieurs valeurs de qualité, un score de qualité du produit final et des indicateurs de qualité associés, et une ou plusieurs contraintes prédéfinies associées à l'unité de fabrication industrielle ;
une mémoire (110) en communication avec les un ou plusieurs processeurs matériels (108), dans lequel les un ou plusieurs processeurs matériels (108) sont configurés pour exécuter des instructions programmées stockées dans la mémoire pour :
prétraiter les données de lots historiques reçues pour un contrôle de suffisance des données et une estimation du bruit, dans lequel la suffisance de données est un indicateur d'une probabilité d'amélioration sur les données disponibles, **caractérisé en ce que** :

construire un modèle de perceptron multicouche (MLP) sur la base des données de lots historiques prétraitées pour apprendre une relation parmi la pluralité de paramètres de fonctionnement, les une ou plusieurs valeurs de qualité, et un score de qualité du produit final et des indicateurs de qualité associés, tout en respectant les une ou plusieurs valeurs de contrainte prédéfinies, dans lequel les données de lots historiques sont annotées avec des étiquettes spécifiques au domaine ;
analyser la relation apprise parmi la pluralité de paramètres de fonctionnement et le score de qualité du produit final et des indicateurs de qualité associés en tant que problème de maximisation d'une qualité ;
déterminer un problème de minimisation de la qualité en convertissant le problème de maximisation de la qualité en utilisant une technique de descente de gradient pour atteindre un minimum global ;
sélectionner un ensemble prédéfini de données avec une qualité maximale pour entraîner un modèle de régression pour chacun de la pluralité de paramètres contrôlables, dans lequel le modèle de régression entraîné prédit une valeur de chaque paramètre contrôlable sur la base de la pluralité de paramètres non contrôlables ;
déterminer un point candidat du problème de minimisation en utilisant les valeurs correspondant à la pluralité de paramètres contrôlables et à la pluralité de paramètres non contrôlables ;
créer une boule souple d'un rayon prédéfini autour d'une clé candidate pour surmonter des données

bruyantes autour du point de départ optimal déterminé du problème de minimisation, dans lequel une technique de distribution gaussienne sphérique est utilisée pour simuler la boule souple créée ;
réaliser une décroissance géométrique avec un facteur de décroissance prédéfini pour un momentum de la boule souple dans le problème de minimisation pour prédire une qualité optimale pour les valeurs de la pluralité de paramètres contrôlables ;
converger l'optimum prédit vers un minimum global au moyen d'une descente de gradient via une optimisation itérative de la boule souple à partir du point candidat dans le problème de minimisation en utilisant une fonction de coût en termes des valeurs de qualité et des valeurs de contrainte, dans lequel la fonction de coût est la somme résultante d'une erreur quadratique moyenne (MSE) d'une fonction de perte négative de score de qualité et d'une fonction softplus de contraintes définies ; et
recommander les valeurs de la pluralité de paramètres contrôlables pour obtenir la qualité optimale à partir de l'unité de fabrication industrielle.

**7.** Système (100) selon la revendication 6, dans lequel une contrainte spécifique au domaine est appliquée dans le problème de minimisation tout en appliquant l'optimisation itérative basée sur le momentum de la boule souple à partir du point candidat.

**8.** Système (100) selon la revendication 6, dans lequel les données de lots historiques sont annotées avec des étiquettes spécifiques au domaine.

**9.** Système (100) selon la revendication 6, dans lequel une technique de distribution gaussienne sphérique est utilisée pour simuler la boule souple créée.

**10.** Système (100) selon la revendication 7, dans lequel la fonction de coût est la somme résultante d'une erreur quadratique moyenne (MSE) d'une fonction de perte négative de score de qualité et d'une fonction softplus de contraintes définies.

**11.** Un ou plusieurs supports de stockage d'informations lisibles par machine non transitoires comprenant une ou plusieurs instructions qui, lorsqu'elles sont exécutées par un ou plusieurs processeurs matériels, amènent :
la réception, par l'intermédiaire d'une interface d'entrée/sortie, de données de lots historiques d'une unité de fabrication industrielle comprenant une pluralité de paramètres de fonctionnement, une ou plusieurs valeurs de qualité, un score de qualité du produit final et des indicateurs de qualité associés, et une ou plusieurs contraintes prédéfinies associées à l'unité de fabrication industrielle, dans lequel la pluralité de paramètres de fonctionnement comprend une pluralité de paramètres contrôlables et une pluralité de paramètres non contrôlables, **caractérisé en ce que** :

le prétraitement, par l'intermédiaire d'un ou plusieurs processeurs matériels, des données de lots historiques reçues pour un contrôle de suffisance des données et une estimation du bruit, dans lequel la suffisance de données est un indicateur d'une probabilité d'amélioration sur des données disponibles ;
la construction, par l'intermédiaire des un ou plusieurs processeurs matériels, d'un modèle de perceptron multicouche (MLP) sur la base des données de lots historiques prétraitées pour apprendre une relation parmi la pluralité de paramètres de fonctionnement, les une ou plusieurs valeurs d'indicateur de qualité, et un score de qualité du produit final et des indicateurs de qualité associés, tout en respectant les une ou plusieurs valeurs de contrainte prédéfinies ;
l'analyse, par l'intermédiaire des un ou plusieurs processeurs matériels, de la relation apprise parmi la pluralité de paramètres de fonctionnement et du score de qualité du produit final et des indicateurs de qualité associés en tant que problème de maximisation d'une qualité ;
la détermination, par l'intermédiaire des un ou plusieurs processeurs matériels, d'un problème de minimisation de la qualité en inversant le problème de maximisation de la qualité en utilisant une technique de descente de gradient pour atteindre un minimum global ;
la sélection, par l'intermédiaire des un ou plusieurs processeurs matériels, d'un ensemble prédéfini de données avec une qualité maximale pour entraîner un modèle de régression pour chacun de la pluralité de paramètres contrôlables, dans lequel le modèle de régression entraîné prédit une valeur de chaque paramètre contrôlable sur la base de la pluralité de paramètres non contrôlables ;
la détermination, par l'intermédiaire des un ou plusieurs processeurs matériels, d'un point candidat du problème de minimisation en utilisant les valeurs correspondant à la pluralité de paramètres contrôlables et à la pluralité de paramètres non contrôlables ;
la création, par l'intermédiaire des un ou plusieurs processeurs matériels, d'une boule souple d'un rayon prédéfini

autour d'une clé candidate pour surmonter des données bruyantes autour du point de départ optimal déterminé du problème de minimisation ;
la réalisation, par l'intermédiaire des un ou plusieurs processeurs matériels, d'une décroissance géométrique avec un facteur de décroissance prédéfini pour un momentum de la boule souple dans le problème de minimisation pour prédire une qualité optimale pour les valeurs de la pluralité de paramètres contrôlables ;
la convergence, par l'intermédiaire des un ou plusieurs processeurs matériels, de l'optimum prédit vers un minimum global au moyen d'une descente de gradient via une optimisation itérative de la boule souple à partir du point candidat dans le problème de minimisation en utilisant une fonction de coût en termes des valeurs de qualité et des valeurs de contrainte ; et
la recommandation, par l'intermédiaire des un ou plusieurs processeurs matériels, des valeurs de la pluralité de paramètres contrôlables pour obtenir la qualité optimale à partir de l'unité de fabrication industrielle.

**12.** Un ou plusieurs supports de stockage d'informations lisibles par machine non transitoires selon la revendication 11, dans lesquels une contrainte spécifique au domaine est appliquée dans le problème de minimisation tout en appliquant l'optimisation itérative basée sur le momentum de la boule souple à partir du point candidat.

**13.** Un ou plusieurs supports de stockage d'informations lisibles par machine non transitoires selon la revendication 11, dans lesquels une technique de distribution gaussienne sphérique est utilisée pour simuler la boule souple créée.

100
104-1
106
102
108
110
104-2
104-N
112
114

FIG. 1

200
Non-controllable parameter values for current batch
Historical Data
Multilayer Perceptron (Model Building)
Optimization Module
Recommendation Set points
Production Batchwise Iterative Training

FIG. 2

300

Receiving, via an input/output interface, a historical batch data of an industrial manufacturing unit comprising a plurality of operating parameters, one or more quality values, end-product quality score and associated quality indicators, and one or more predefined constraints associated with the industrial manufacturing unit — 302

Pre-processing the received historical batch data for data sufficiency checking as well as predefined noise estimation technique — 304

Building a multilayer perceptron (MLP) model based on the pre-processed historical batch data to learn a relationship among the plurality of operating parameters, the one or more quality indicator values, and end-product quality score and associated quality indicators, while adhering to the one or more predefined constraint values — 306

Analyzing the learnt relationship among the plurality of operating parameters and the end-product quality score and associated quality indicators as a maximization problem of quality — 308

Determining a minimization problem of the quality by inverting the maximization problem of quality using a gradient decent technique to achieve a global minima — 310

A

FIG. 3A

A
Selecting a predefined set of data with maximum quality to train a regression model for each of the plurality of controllable parameters, wherein the trained regression model predicts value of each controllable parameter based on the plurality of non-controllable parameters
312
Determining a candidate point of the minimization problem by using the values corresponding to the plurality of controllable parameters and the plurality of uncontrollable parameters
314
Creating a soft ball of a predefined radius around a candidate key to overcome noisy data around the determined optimal starting point of the minimization problem
316
Performing a geometric decay with a predefined decay factor for a momentum of the soft ball in the minimization problem to predict an optima
318
Converging the predicted optima to a global minima through a gradient descent through iterative optimization of the soft ball from the candidate point in the minimization problem using a cost function in terms of the quality values and the constraint values
320
Recommending the values of the plurality of controllable parameters to obtain the optimal quality to the user
322

FIG. 3B

400
Start
Initial history of batch data containing actual batch parameters and corresponding measured quality scores
B
Data sufficiency test
Noise estimation
Is data sufficient ?
No
Yes
DL based MLP hyperparameters initialized by NN recommender
Inverse the quality curve against controllable and non-controllable parameters to make it minimization problem for gradient descent
Find candidate point as optimal starting point corresponding to top 10% of quality score from historical data
Each controllable parameter is derived by regression of all non-controllable parameters and thus the corresponding candidate point is determined
A

FIG. 4A

A
Turn candidate point to a softball of certain radius around certain center
Constraint enforce by softplus activation
Calculate ball center and radius based on average quality score as well as penalty of constraint violation
Perform gradient descent technique using momentum and decay of radius to achieve global minima of cost function and return the corresponding parameters
Model inference
Set recommendation for next batch run
Actual batch run and quality score measurement in plant
Is quality target achieved?
No
B
Yes
Stop

FIG. 4B

500

Constraint Across All Epochs for the Last Batch
Actual value of the constrained param
Threshold value of the constraint
Constraint Value
2.6
2.4
2.2
2.0
1.8
1.6
0
5
10
15
20
25
30
35
40
Epochs


FIG. 5

inverted Quality
600
gradient
descent
global optima
(Qopt)
global minima (target Qmax)
constraint region
argmin (w/ constraint)
global argmin
controllable parameter(s)

FIG. 6

700
Score Improvement accross all batches
score
1.0
0.9
0.8
0.7
0.6
0.0
2.5
5.0
7.5
10.0
12.5
15.0
17.5
batch no.
predicted score
actual score
actual_mean_scores
historical best

FIG. 7

## REFERENCES CITED IN THE DESCRIPTION

*This list of references cited by the applicant is for the reader’s convenience only. It does not form part of the European patent document. Even though great care has been taken in compiling the references, errors or omissions cannot be excluded and the EPO disclaims all liability in this regard.*

### Patent documents cited in the description


- IN 202421008939
- US 2022035348 A1
- EP 3982225 A2
- EP 3885850 A1